# EUROPEAN PATENT SPECIFICATION

(11) **EP 1 802 903 B1**
(45) Date of publication and mention of the grant of the patent: **21.09.2011**
(21) Application number: 04762970.4
(22) Date of filing: 04.10.2004
(51) Int. Cl.: F16K 21/16

(54) **VOLUMETRIC VALVE**
VOLUMETRISCHES VENTIL
VANNE VOLUMETRIQUE

(43) Date of publication of application: 04.07.2007
(73) Proprietor: Atassi, Mohamed Radwan Rafaat, Cairo (EG)
(72) Inventor: Atassi, Mohamed Radwan Rafaat, Cairo (EG)
(74) Representative: Viering, Jentschura & Partner
(86) International application number: PCT/EG2004/000039
(87) International publication number: WO 2006/037351

(56) References cited:
- GB-A- 2 138 541
- US-A- 4 202 467

## Description

### Technical Field

A regular valve of potable water and liquid to control and shutdown the flow of liquid in emergency cases.

### Background Art

In computer, if there is no activity of user, system could shutdown as no attendance. In electricity overload due to long running causes shutdown of the system. Water and other liquids need some control to shutdown the flow by sensing of emergency or absence of control.

US 4 202 467 A discloses a valve device for liquids for automatically closing a valve element against time and flowrate of a liquid flowing through an orifice, the valve device comprising: an inlet for a liquid, a first valve element, a first orifice closable by the said first valve element such that the first valve element covers the first orifice, a wheel rotatable by liquid flowing through the first orifice, a gearbox, a reduction gear unit designed as planetary gear set or as a transfer box gearing and received in said gearbox, wherein the reduction gear unit is drivable by said wheel, a ratchet releasable against an adjustable limit, with the position of release depending on time and the flowrate of a liquid flowing through the said first orifice, and a telescopically expandable valve column biased by a spring which spring is held by said ratchet, wherein telescopic expansion of the valve column automatically causes closing of the valve element.

### Disclosure of to Invention

According to the present invention a valve device as claimed, in claim 1 is provided. The sub-claims show some preferred embodiments of such a valve device.

The invention is to convert a regular globe valve (1) (or a tap) to a smart valve which is to shutdown automatically in case of emergency through operating a double valving. Double valving means that the valve has its original closing mode either mechanical (6), electrical timer, photocell, pneumatic control or level control. Plus additional valving that operates automatically in emergency.

Double valving could be in a single seal (8), which would be more practical and economical, or double seal (9 and 10). In this literature we explain in detail only the single seal type, while in drawing we show the different types. As an example, the original closing of a regular mechanical globe valve is by turning its hand wheel (6) in normal way clockwise direction. The automatic closing of the valve comes through telescopic expansion of the valve's column (37) (We celled expansion chamber) which forces the open valve to close. The expansion of the valve's column comes under the pressure of a spring (39) kept compressed and held by ratchet (40) at a critical position (38).

Releasing the ratchet comes when the liquid flow duration is beyond the limit set by the inhabitant. The liquid flow duration is not a time set, it is a combination of time and flow rate of liquid passing through the valve. If the valve left open fully then automatic shutdown will come within short time. If the valve left open at low flow rate it will take longer time to shutdown automatically.

When the flow of the liquid passes through the orifice of the valve (3) it rotates a round streamer (wheel) (15) in the center of the valve seal which in turn goes through double magnet (22) to a reduction chamber (gear box) (21) to reduce the number of rotation of the top gear and its attached limit disc (33) to a portion of one turn, the number rotation are reduced to a maximum of one turn of a disc on the top of the chamber. This disc could be adjusted to a suitable point to activate the ratchet to release the column expansion mechanism.

If the valve is closed by its regular way, the liquid flow stops, then the set of gears in reduction chamber is free to turn in the opposite direction under the effect of a spring (35) to restart again from its original position.

If the valve is kept open for long time then the pointer of the limit disc on the top of the reduction chamber release the ratchet (40) on the valve's column to expand the column (43) and close the valve automatically.

After the automatic shutdown if the hand wheel (6) of the valve turned by hand to close it as per its normal use, it forces the valve column to contract to lock the expansion mechanism (expansion chamber at compression mode) at the same time it hooks the ratchet (40) at the critical position (38).

### The invention has 4 main parts:

1- The drive parts round streamer (15) (or whirlpooling round streamer) (20). This streamer has to rotate mechanically by the flow.
2- Speed reduction chamber (Gear box) (21).
   This mechanism has two functions:
   a- Reducing the number of rotation generated by round streamer to a portion of one turn.
   b- Signaling the compression chamber by the pointer (34) of the limit disc to expand its column by releasing the hook (38) at the ratchet when the amount of liquid flow is bigger than the preset quantity.
3- Automatic reset system in normal use. Flashing out the recorder rotation automatically when the flow stop and return to its start position by spring(35).
4- Expansion chamber.

This mechanism has telescopic expansion of the valve column (37). Under the pressure of a spring (39) and hooked by ratchet (40) at critical position, which is mechanical anyhow.

### Alternative Design of Reduction Chamber with Signaling Shutdown

### A- Mechanical Design:

We have two options for mechanical design.
A1- Reduction through two idle parallel columns (26 and 27) and a set of equal double gear (23) rotates freely on both columns and separated by spacer (28).
A2- Reduction through multistage micro planetary gears (24). This option is more expensive but it allows free movement backward of the limit disc (33) without need of disengage the round streamer.

### B- Electronic designs:

This choice needs periodic maintenance to change the inside buttery. It may be needed in very sensitive location like power plants, cooling system of atomic reactor.

The design consists of a regular electronic current counter, which takes its readings from the magnet (located on top of the streamer) rotation with liquid. The counter flash out the readings automatically when the flow stop.

Another limit counter is set by the user as the rule of shutdown. If the reading of the current counter exceeds the reading of the rule counter, then a comparison chips would activate the expansion chamber to expend the column and shutdown the flow.

When the valve turned back to operation, it will contract the expansion chamber and be ready for regular operation.

### Alternative of Double Valving

In the previous description we concentrated on a single seal valve. In this option the emergency seal close the valve by spring pressure. If the liquid is under very high pressure then spring pressure should by very high too.

One Alternative is to have a separate small area seal for emergency then there will be two seal in sequence.

Another Alternative is to have the emergency seal in the opposite direction, to be in direction of the pressure.

### Whirlpooling Round Streamer Alternative

In mechanical flashing out of the recorded rotation of the round streamer it require free backward movement without generating flow of liquid in opposite direction. In planetary gear it is possible while in direct gearing it require disengagement of the round streamer. For this reason round streamer is replaced by a whirpooling one, where the flow of liquid generates two movements rotational and axial for engagement with reduction chamber.

When flow stops disengagement will be done through a spring (19) to allow the set of gears to rotate free backward to start position.

### Industrial Applicability

Smart valve does not require any special things except for the transfer of movement through magnet to isolate the high pressure end from the low pressure and to isolate small gears from wetting to avoid accumulation of residuals, especially calcium.

In addition smart valve kit make it easy to convert any previously installed valve from regular valve to Smart valve through extending the old valve neck and insert new seal assembly.

### Description of Drawings

Fig (1): shows a regular globe valve.
Fig (2): shows a complete Smart valve kit of micro planetary gear type.
Fig (3): shows how the valve converted to Smart valve by adding the kit.
Fig (4): shows the component of a Smart valve seal.
   From No. (14) to No. (18) are the wheel which rotate the flow and its holding to the frame of rubber seal.
   No. (21, 22, 24, 25, 29 and 31) are three multistage planetary gears in casing to reduce number of rotation of the limit disc.
   No. (32, 33, 34 and 35) are the limit disc and its spring to auto set back when flow stop and release ratchet if flow exceed the preset amount.
   No. (36) is the holder of limit disc
   No. (37) is the column valve's extension and No. (38) its pin.
   No. (39) is the spring to extend the valve's column.
   No. (42) is the range of movement of pin (38).
   No. (40) is the ratchet
   No. (41) is the axle of ratchet and its holding spring.
   No. (43) is the elongation of the valve column to contain the telescopic expansion. No. (44) is a protection cylinder of the inner parts.
   No. (5) is the end of valve column of the original globe valve.
Fig (5): shows the same as of fig (4) with the flowing difference. Change the wheel by whirpooling streamer (15) to have additional axial movement. It adds (19) washer spring to disengage when flow stop (26, 27, 28, 29 and 30),gears to replace the planetary-gear.
Fig (6): shows the same as fig (4) and fig (5) the difference is to alter mechanical counting by electronic one.
   No. (45) shows the reading of flow wheel No. (46) is a buttery.
   No. (47) is a preset counter shows the max number of rotation of counter (45) to consider there is an emergency.
   No. (48) is a comparison chip to compare the reading of the current counter with the limit to initiate a signal (49) to shutdown.
Fig (7): shows Smart valve with two seal from the same direction one for regular usage and one work only in emergency.
Fig (8): shows Smart valve with two seal in two directions. The emergency one works with direction of the pressure. This is to be used with extreme high pressure flow.

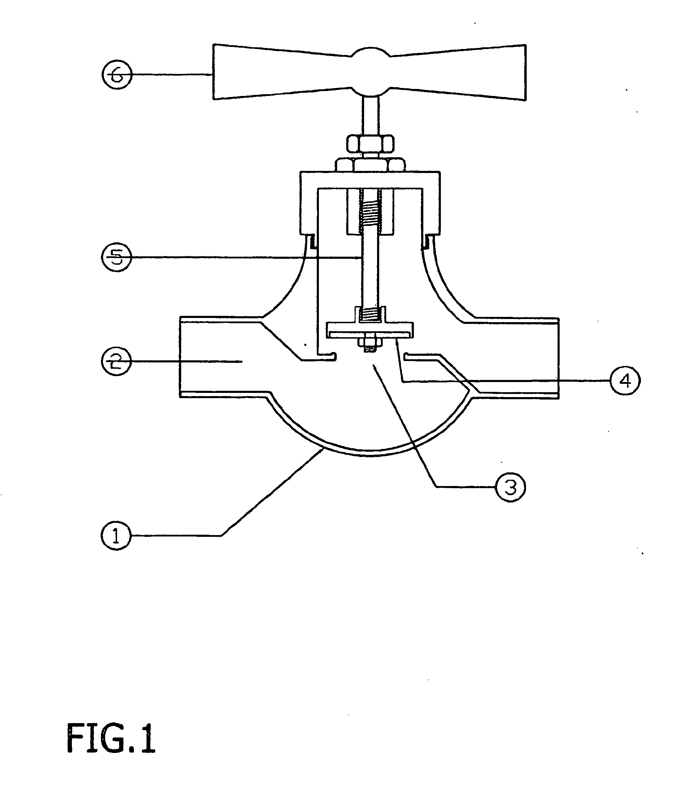

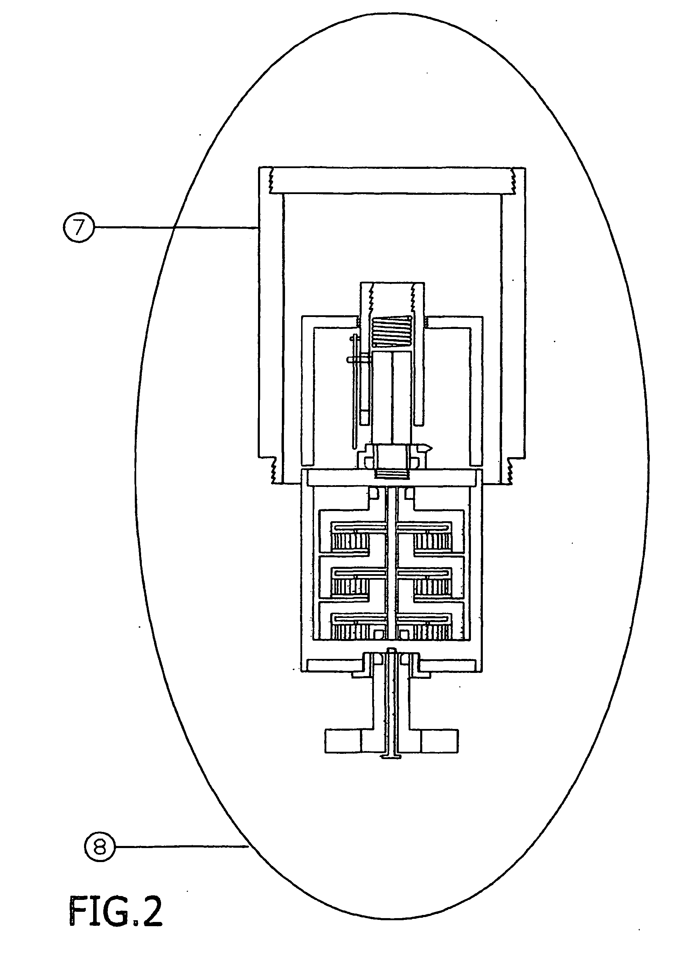

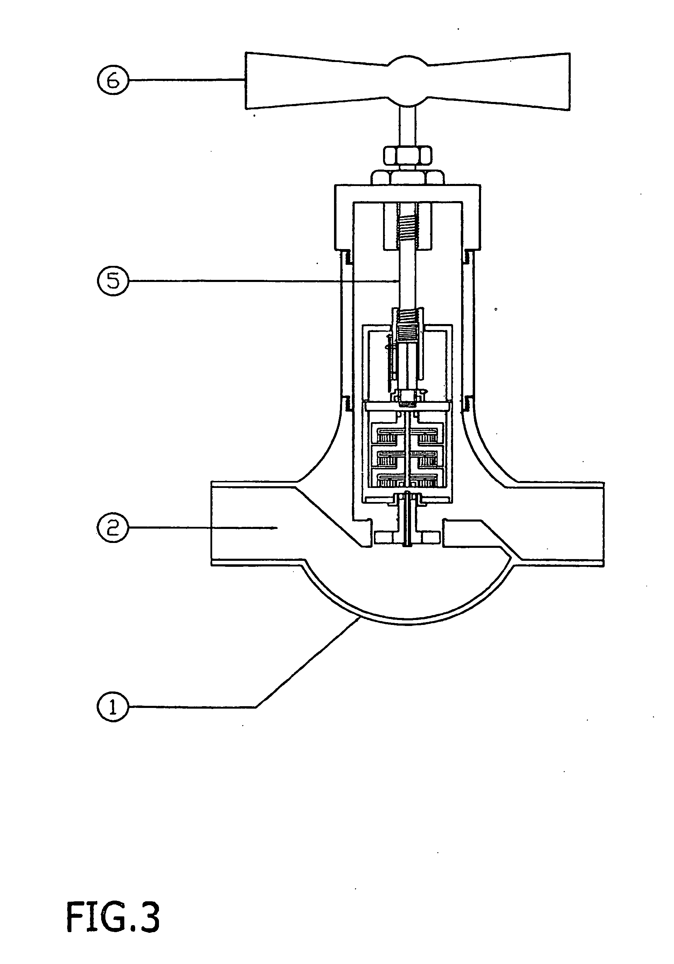

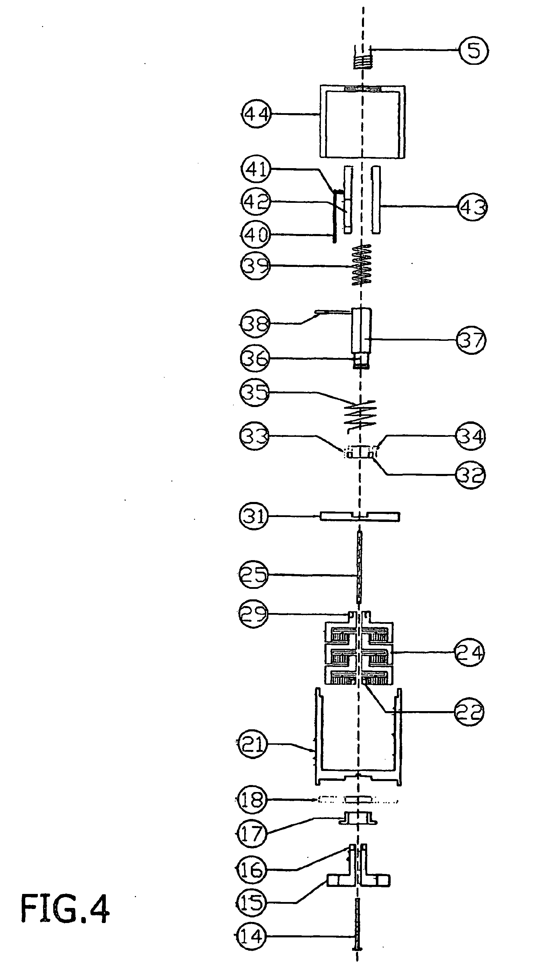

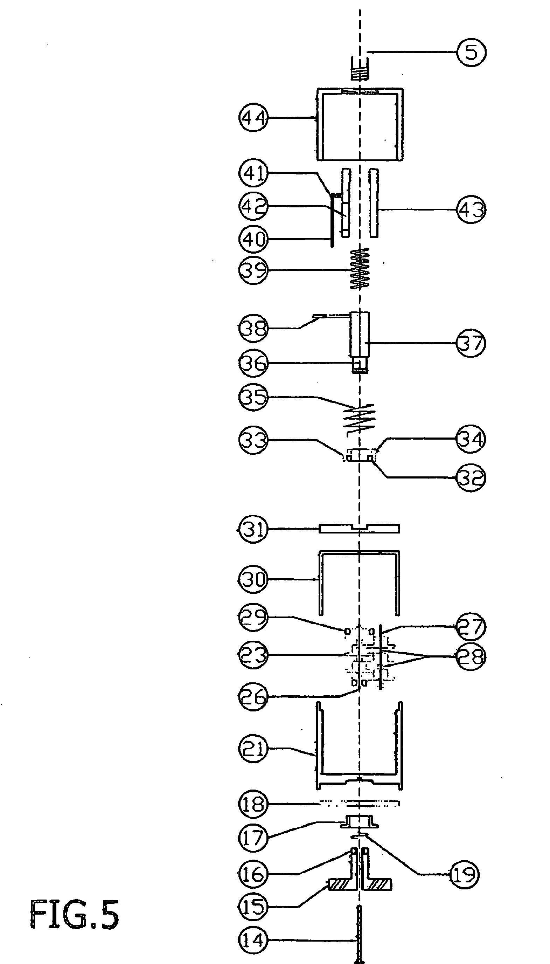

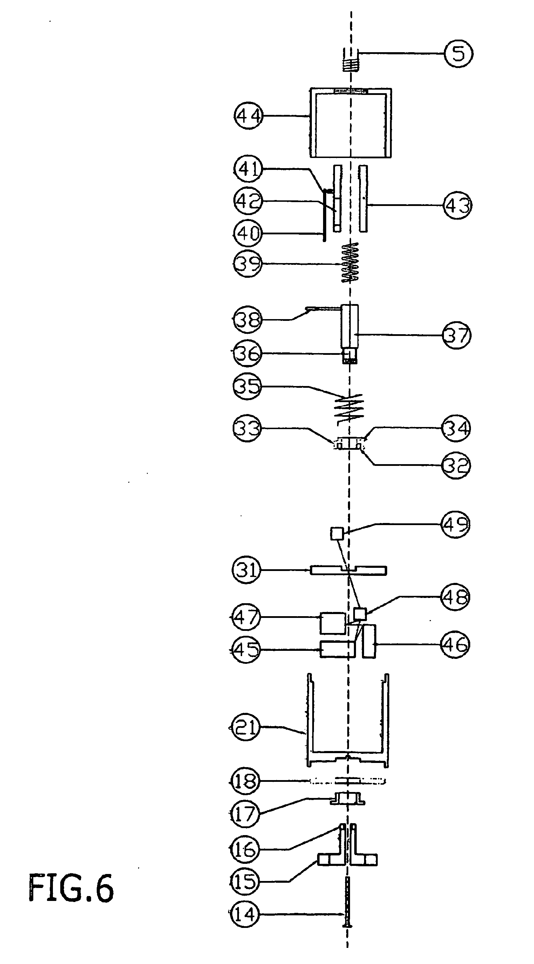

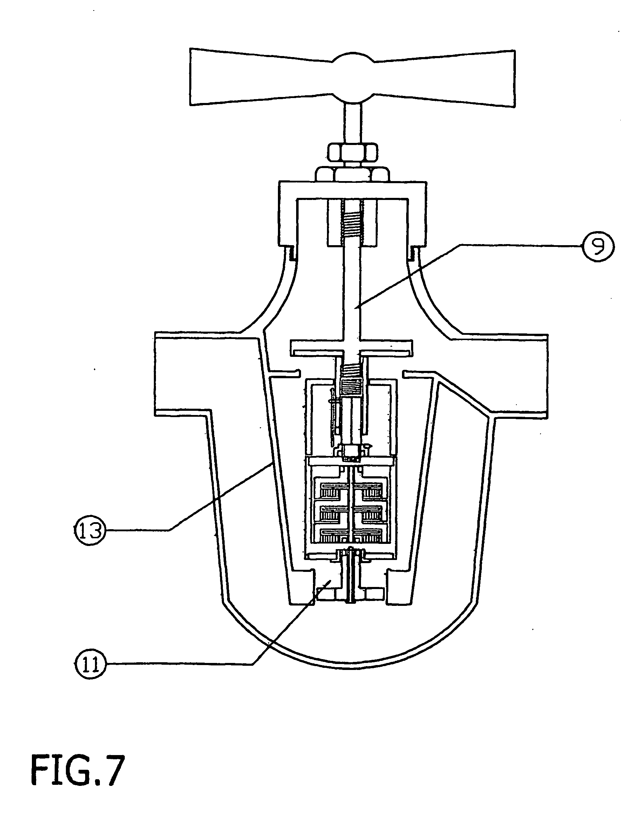

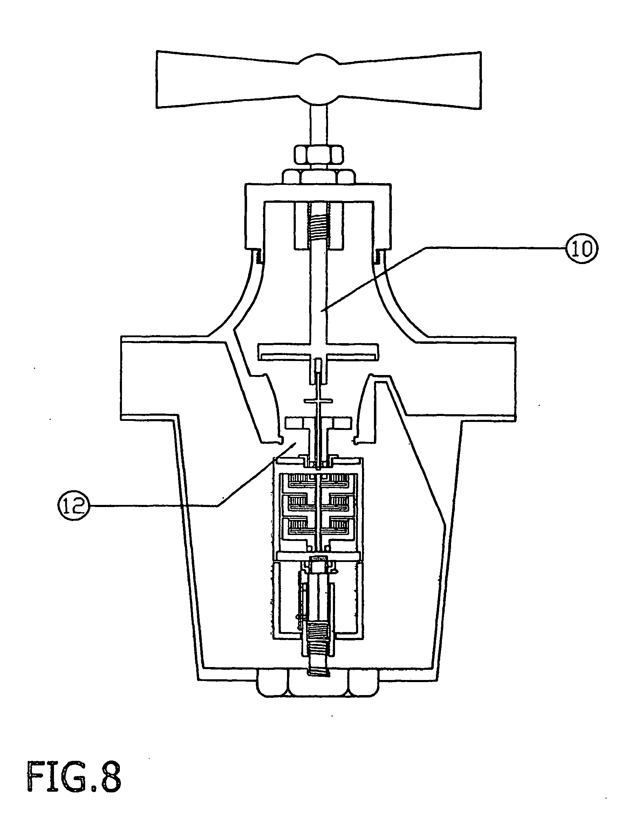

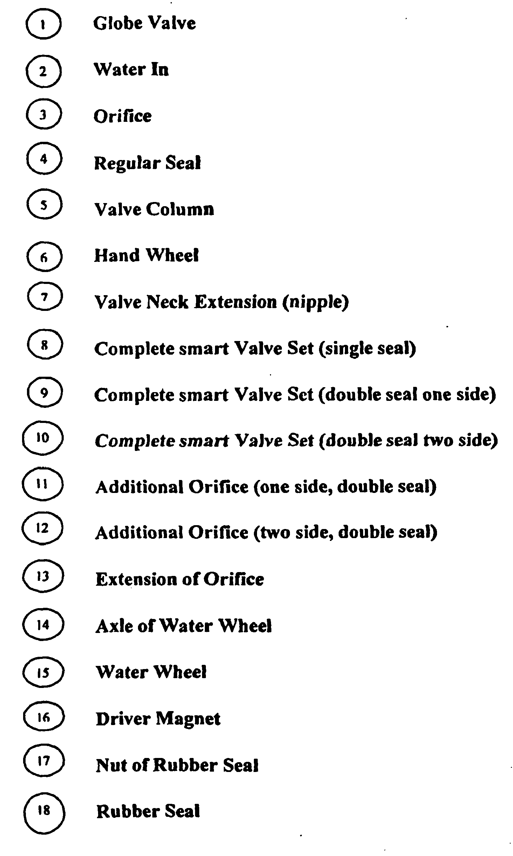

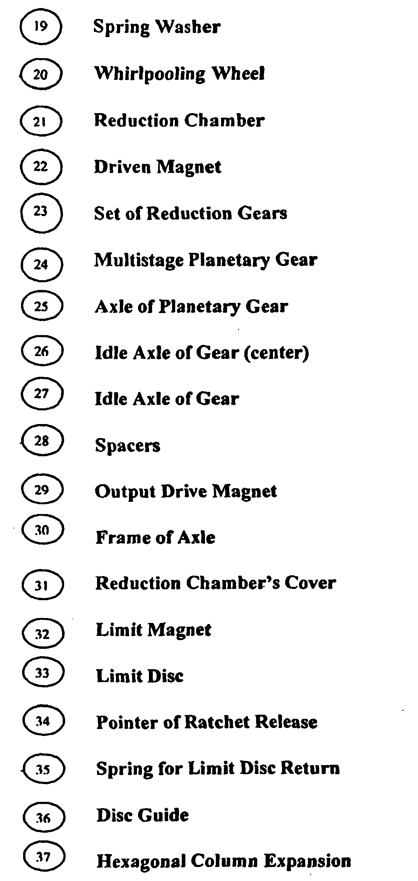

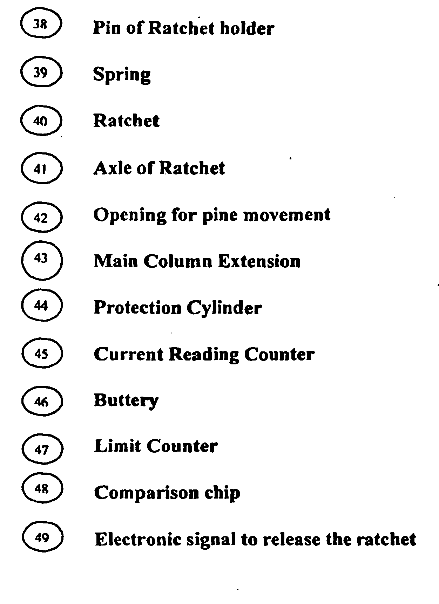

## Claims

1. Valve device for liquids for automatically closing a valve element against time and flowrate of a liquid flowing through an orifice (3, 11, 12), the valve device comprising:
an inlet (2) for a liquid;
a first valve element;
a first orifice (3, 11,12) closable by the said first valve element such that the first valve element covers the first orifice (3,11,12);
a wheel (15) rotatable by liquid flowing through the first orifice (3, 11, 12);
a gearbox (21);
a reduction gear unit (24; 23, 26, 27, 28, 29) designed as planetary gear set (24) or as a transfer box gearing (23, 26, 27, 28, 29) and received in said gearbox (21), wherein the reduction gear unit (24; 23, 26, 27, 28, 29) is drivable by said wheel (15);
a ratchet (40) releasable against an adjustable limit, with the position of release depending on time and the flowrate of a liquid flowing through the said first orifice (3, 11, 12); and
a telescopically expandable valve column (37) biased by a spring (39) which spring (39) is held by said ratchet (40), wherein telescopic expansion of the valve column (37) automatically causes closing of the valve element;
**characterized in that**
the gearbox (21) is axially movable arranged and the first valve element is formed by a bottom of the gearbox (21).

2. Valve device of claim 1, **characterized in that** a rubber seal. (18) is provided on an outer surface of said bottom of said gearbox (21).

3. Valve device of claim 1 or 2, **characterized in that** the valve device further has a second valve element and a second orifice closable by said second valve element such that the second valve element covers the second orifice.

4. Valve device of any of claims 1 to 3, **characterized in that** the valve device further has a hand wheel (6).

5. Valve device of any of claims 1 to 4, **characterized in that** the planetary gear set (24) is a multistage planetary gear set (24).

## Patentansprüche

1. Ventileinrichtung für Flüssigkeiten zum automatischen Schließen eines Ventilelements in Abhängigkeit von Zeit und Durchflussmenge einer durch eine Öffnung (3, 11, 12) strömenden Flüssigkeit, wobei die Ventileinrichtung aufweist:
einen Einlass (2) für eine Flüssigkeit;
ein erstes Ventilelement;
eine erste Öffnung (3, 11, 12), die von dem ersten Ventilelement derart verschließbar ist, dass das erste Ventilelement die erste Öffnung (3, 11, 12) abdeckt;
ein Rad (15), das von der durch die erste Öffnung (3, 11, 12) strömenden Flüssigkeit drehbar ist;
ein Getriebegehäuse (21);
eine Reduktionsgetriebeeinheit (24, 23, 26, 27, 28, 29), die als Planetengetriebe (24) oder als Verteilergetriebe (23, 26, 27, 28, 29) gestaltet und in dem Getriebegehäuse (21) aufgenommen ist, wobei die Reduktionsgetriebeeinheit (24, 23, 26, 27, 28, 29) von dem Rad (15) antreibbar ist;
eine Sperrklinke (40), die in Abhängigkeit von einem einstellbaren Grenzwert freigebbar ist, wobei die Freigabeposition von Zeit und der Durchflussmenge einer durch die erste Öffnung (3, 11, 12) strömenden Flüssigkeit abhängig ist; und
eine teleskopisch erweiterbare Ventilsäule (37), die von einer Feder (39) vorgespannt ist, welche Feder (39) von der Sperrklinke (40) gehalten ist, wobei die teleskopische Erweiterung der Ventilsäule (37) automatisch das Schließen des Ventilelements bewirkt;
**gekennzeichnet dadurch, dass**
das Getriebegehäuse (21) axial beweglich angeordnet ist und das erste Ventilelement von einem Boden des Getriebegehäuses (21) gebildet ist.

2. Ventileinrichtung nach Anspruch 1, **gekennzeichnet dadurch, dass** an einer Außenfläche des Boden des Getriebegehäuses (21) eine Gummidichtung (18) vorgesehen ist.

3. Ventileinrichtung nach Anspruch 1 oder 2, **gekennzeichnet dadurch, dass** die Ventileinrichtung ferner ein zweites Ventilelement und eine zweite Öffnung hat, die von dem zweiten Ventilelement derart verschließbar ist, dass das zweite Ventilelement die zweite Öffnung abdeckt.

4. Ventileinrichtung nach einem der Ansprüche 1 bis 3, **gekennzeichnet dadurch, dass** die Ventileinrichtung ferner ein Handrad (6) hat.

5. Ventileinrichtung nach einem der Ansprüche 1 bis 4, **gekennzeichnet dadurch, dass** das Planetengetriebe (24) ein mehrstufiges Planetengetriebe (24) ist.

## Revendications

1. Dispositif à soupape pour liquides afin de fermer automatiquement un élément de soupape en fonction du temps et du débit d'un liquide s'écoulant à travers un orifice (3, 11, 12), le dispositif à soupape comprenant :
une entrée (2) pour un liquide ;
un premier élément de soupape ;
un premier orifice (3, 11,12) qui peut être fermé par ledit premier élément de soupape de sorte que le premier élément de soupape recouvre le premier orifice (3, 11, 12) ;
une roue (15) qui peut tourner par écoulement de liquide à travers le premier orifice (3, 11, 12) ;
un train d'engrenage (21) ;
une unité d'engrenage réducteur (24 ; 23, 26, 27, 28, 29) conçue comme un jeu d'engrenage planétaire (24) ou comme un engrenage de boîte de transfert (23, 26, 27, 28, 29) et reçu dans ledit train d'engrenage (21), dans lequel l'unité d'engrenage réducteur (24 ; 23, 26, 27, 28, 29) peut être entraînée par ladite roue (15) ;
un cliquet (40) qui peut être libéré contre une limite ajustable, la position de libération dépendant du temps et du débit d'un liquide s'écoulant à travers ledit premier orifice (3, 11, 12); et
une colonne de soupape à extension télescopique (37) sollicitée par un ressort (39), lequel ressort (39) est maintenu par ledit cliquet (40), dans lequel l'extension télescopique de la colonne de soupape (37) entraîne automatiquement la fermeture de l'élément de soupape;
**caractérisé en ce que**
le train d'engrenage (21) peut être aménagé axialement mobile et le premier élément de soupape est formé par un fond du train d'engrenage (21).

2. Dispositif à soupape selon la revendication 1, **caractérisé en ce qu'**un joint étanche de caoutchouc (18) est disposé sur une surface externe dudit fond dudit train d'engrenage (21).

3. Dispositif à soupape selon la revendication 1 ou 2, **caractérisé en ce que** le dispositif à soupape a en outre un second élément de soupape et un second orifice qui peut être fermé par ledit second élément de soupape de sorte que le second élément de soupape recouvre le second orifice.

4. Dispositif à soupape selon l'une quelconque des revendications 1 à 3, **caractérisé en ce que** le dispositif à soupape a en outre un volant de manoeuvre (6).

5. Dispositif à soupape selon l'une quelconque des revendications 1 à 4, **caractérisé en ce que** le jeu d'engrenage planétaire (24) est un jeu d'engrenage planétaire à plusieurs étages (24).
